# EUROPÄISCHE PATENTSCHRIFT

(11) **EP 1 640 584 B1**
(45) Veröffentlichungstag und Bekanntmachung des Hinweises auf die Patenterteilung: **19.12.2007**
(21) Anmeldenummer: 05103859.4
(22) Anmeldetag: 10.05.2005
(51) Int. Cl.: F02B 37/013

(54) **Verdichterbypassventil bei mehrstufiger Aufladung**
Compressor bypass valve for sequental supercharging
Vanne de dérivation de compresseur pour suralimentation sequentielle

(30) Priorität: 16.09.2004 DE 102004044818
(43) Veröffentlichungstag der Anmeldung: 29.03.2006
(73) Patentinhaber: ROBERT BOSCH GMBH, 70442 Stuttgart (DE)
(72) Erfinder: Vogt, Guenther, 83607 Holzkirchen (DE)

(56) Entgegenhaltungen:
- EP-A- 1 387 058
- DE-A1- 19 514 572
- US-A- 4 709 552

## Beschreibung

### Technisches Gebiet

Um die Leistung von Verbrennungskraftmaschinen zu erhöhen, werden Abgasturbolader eingesetzt. Der große Arbeitsbereich von Verbrennungskraftmaschinen in Personenkraftwagen erfordert eine Regelung des Abgasturboladers, um einen vorgegebenen Ladedruck zu erzielen. Hierzu wird bei mehrstufiger Aufladung die Frischluft zunächst in einem Niederdruckverdichter und anschließend in einem Hochdruckverdichter komprimiert. Bei großen Frischluftmengen wird die Stopfgrenze des Hochdruckverdichters überschritten. Um zu vermeiden, dass der Hochdruckverdichter in diesem Fall als Drossel arbeitet, kann ein Teil der Frischluft über einen Verdichterbypass um den Hochdruckverdichter herum geleitet werden. Bei Frischluftmengen unterhalb der Stopfgrenze des Hochdruckverdichters ist der Verdichterbypass geschlossen.

### Stand der Technik

Um zu vermeiden, dass bei niedrigen Abgastemperaturen und einer geringen Abgasmenge, wie sie bei niedrigen Drehzahlen auftreten, der Druckaufbau im Abgasturbolader nicht verzögert wird, haben Abgasturbolader in Verbrennungskraftmaschinen, wie sie derzeit eingesetzt werden, eine geringe Eigenmasse und sprechen damit schon bei kleinen Abgasströmen an. Eine Erweiterung der Leistungsgrenzen des Abgasturboladers erfolgt zum Beispiel durch eine zweistufig geregelte Aufladung, wie sie aus Bosch, Kraftfahrttechnisches Taschenbuch, 23. Auflage, Vieweg, 1999, Seiten 445 - 446 bekannt ist. Bei der zweistufig geregelten Aufladung sind zwei unterschiedlich große Abgasturbolader in Reihe geschaltet. Der Abgasmassenstrom strömt zunächst in eine Abgassammelrohrleitung. Von hier wird der Abgasmassenstrom über eine Hochdruckturbine expandiert. Bei großen Abgasmengen, wie sie bei hohen Drehzahlen auftreten, kann ein Teil des Abgasmassenstroms über einen Bypass um die Hochdruckturbine herumgeleitet werden. Anschließend wird der gesamte Abgasmassenstrom von einer der Hochdruckturbine nachgeschalteten Niederdruckturbine genutzt. Der angesaugte Frischluftmassenstrom wird zunächst durch eine Niederdruckstufe vorverdichtet und anschließend in der der Hochdruckstufe weiter verdichtet. Idealerweise wird der Frischluftmassenstrom zwischen der Niederdruckstufe und der Hochdruckstufe zwischengekühlt.

Bei kleinen Motordrehzahlen, d.h. bei kleinen Abgasmassenströmen, bleibt der die Hochdruckturbine umgehende Bypass vollständig geschlossen und der gesamte Abgasmassenstrom expandiert über die Hochdruckturbine. Hierdurch ergibt sich ein sehr schneller und hoher Ladedruckaufbau. Mit zunehmender Motordrehzahl wird die Expansionsarbeit kontinuierlich zur Niederdruckturbine verlagert, indem der Bypassquerschnitt entsprechend vergrößert wird. Durch die zweistufig geregelte Aufladung wird somit eine stufenlose Anpassung auf der Turbinen- und Verdichterseite an die Erfordernisse des Motorbetriebs ermöglicht. Durch den abnehmenden Abgasstrom über die Hochdruckturbine nimmt die Verdichterleistung des Hochdruckverdichters ab. Bei großen Frischlufftnassenströmen erfolgt die Verdichtung lediglich mittels des Niederdruckverdichters. Der Hochdruckverdichter wird von der Frischluft durchströmt, wobei der Druck vor und hinter dem Hochdruckverdichter gleich ist. Sobald die Stopfgrenze des Hochdruckverdichters überschritten wird, d.h., dass der den Hochdruckverdichter durchströmende Frischluftstrom den Volumenstrom übe r-schreitet, den der Hochdruckverdichter ohne Druckverlust fördern kann, wirkt der Hochdruckverdichter als Drossel und der Druck der Frischluft nimmt beim Durchströmen des Hochdruckverdichters ab. Um zu vermeiden, dass die Stopfgrenze überschritten wird, wird bei großen Frischluftmassenströmen ein Teil der Frischluft über einen Verdichterbypass um den Hochdruckverdichter herumgeführt. Im Verdichterbypass ist ein Ventil aufgenommen, welches den Verdichterbypass verschließt oder freigibt. Derzeit wird das Ventil über eine externe Steuereinheit angesteuert.

Aus ATZ Automobiltechnische Zeitschrift 88, 1986, Seite 268, und aus US 4709552 A, ist ein Zuschaltventil für eine Registeraufladung mit zwei Abgasturboladern bekannt. Über das Zuschaltventil wird die Frischluft bei niedrigen Drehzahlen zunächst an einem der beiden Verdichter vorbei geleitet. Erst bei höheren Drehzahlen wird der zweite Verdichter zugesch altet. Hierzu ist im Bypass ein Verdrängerkörper aufgenommen, bei welchem im geschlossenen Zustand sowohl auf die Anströmseite als auf die Abströmseite eine Druckkraft wirkt. Solange die Druckkraft auf der Abströmseite größer ist als auf der Anströmseite, ist das Ventil geschlossen. Sobald der Druck auf der Anströmseite und der Abströmseite gleich groß ist, öffnet das Ventil. Da jeweils der gesamte Verdrängerkörper bewegt wird, muss zum Öffnen und Schließen des Bypasses eine relativ große Masse bewegt werden. Dies führt zu einem vergleichsweise langsamen Öffnen des Ventils.

### Darstellung der Erfindung

Der erfindungsgemäß e Verdichterbypass für mehrstufige Aufladung in Verbrennungskraftmaschinen mit einer Aufladeeinrichtung, z.B. einem Abgasturbolader, umfas st einen in einem Ventilgehäuse aufgenommenen Verdrängerkörper. Der Verdrängerkörper ist in mindestens zwei Verdrängerteile geteilt, wobei ein erstes Verdrängerteil, welches der Anströmseite zugewandt ist, den Bypass verschließt oder freigibt. Vorteil des erfindungsgemäßen Verdichterbypasses mit einem in einem Ventilgehäuse aufgenommenen Verdrängerkörper gegenüber dem aus dem Stand der Technik bekannten Verdichterzuschaltventil mit Verdrängungskörper, wie es bei der Registeraufladung eingesetzt wird, ist, dass durch den zweigeteilten Verdrängungskörper nur eine geringe Masse zum Verschließen oder Freigeben des Bypasses bewegt wird. Hierdurch kann ein schnelles Öffnen und Schließen gewährleistet werden. Durch das schnelle Öffnen wird bei Erreichen der Stopfgrenze sofort ein Teil der Frischluft über den Verdichterbypass geleitet und so der Frischluftstrom über den Hochdruckverdichter reduziert. Auf diese Weise wird vermieden, dass der Hochdruckverdichter als Drossel wirkt und der Druck beim Durchströmen des Hochdruckverdichters sinkt.

Eine weitere Verringerung der Masse des Verdrängerkörpers wird dadurch erreicht, dass der Verdrängerkörper als Hohlkörper ausgebildet ist.

Durch eine strömungsgünstige Form des Verdrängerkörpers wird der Druckverlust beim Umströmen des Verdrängerkörpers reduziert. Hierdurch lässt sich ein Absinken des Drucks beim Durchströmen des Bypasses vermeiden.

In einer bevorzugten Ausführungsform ist der Verdrängerkörper aus einem Leichtmetall oder einer Leichtmetalllegierung gefertigt. Ein besonders bevorzugtes Material zur Herstellung des Verdrängerkörpers ist Aluminium. Weitere geeignete Materialien sind zum Beispiel Titan oder Magnesium/Titan-Legierungen. Bei einer Zwischenkühlung der Frischluft nach der Kompression im Niederdruckverdichter kann der Verdrängerkörper auch aus Kunststoff gefertigt werden. Dabei sind Kunststoffe auszuwählen, die gegen die auftretenden Temperaturen stabil sind. Ein geeigneter Kunststoff ist zum Beispiel PTFE (Polytetrafluorethen).

Das erste Verdrängerteil, mit welchem der Bypass verschlossen oder freigegeben wird, ist vorzugsweise mit einem Führungsstift im zweiten Verdrängerteil geführt. Hierzu ist im zweiten Verdrängerteil eine Bohrung ausgeführt, welche den Führungsstift aufnimmt. Um ein Verkanten des Führungsstiftes zu vermeiden und um die Gleiteigenschaften des Führungsstiftes zu verbessern, ist in der Bohrung vorzugsweise eine Hülse aus einem die Haftreibung reduzierendem Material, z.B. PTFE, aufgenommen, in der der Führungsstift geführt ist.

Um den Kanal dicht zu verschließen, ist das erste Verdrängerteil vorzugsweise von einem Dichtelement umschlossen, welches bei geschlossenem Ventil am Ventilgehäuse anliegt. Als Dichtelement eignet sich z.B. ein O-Ring. Das Material des Dichtelements ist vorzugsweise so gewählt, dass es gegen die Temperaturen im Kanal beständig ist. Ein geeignetes Material ist zum Beispiel Fluorkautschuk, wie er unter dem Namen Viton im Handel erhältlich ist.

Um das erste Verdrängerteil in seinen Schließsitz zu stellen, ist im Verdrängerkörper ein Federelement aufgenommen. In einer bevorzugten Ausführungsform ist das Federelement als Spiralfeder ausgebildet und umschließt den Führungsstift. Der Druck, bei welchem das erste Verdrängerteil den Bypass freigibt, wird über die Federkraft des Federelements eingestellt. Die Federkraft des Federelements wirkt in entgegengesetzter Richtung zur Druckkraft der in den Bypass strömenden Frischluft auf das erste Verdrängerteil. Somit nimmt mit zunehmender Federkraft der erforderliche Öffnungsdruck zum Öffnen des Bypasses zu.

Das zweite Verdrängerteil ist vorzugsweise über Stege mit dem Ventilgehäuse verbunden und wird so an seinem Platz gehalten. Die Stege sind vorzugsweise an einem Haltering befestigt, welcher in einer Nut des Ventilgehäuses aufgenommen ist. Die Stege können z.B. rechteckförmigen, kreisförmigen, dreieckförmigen oder jeden beliebigen anderen, dem Fachmann bekannten Querschnitt annehmen. In einer bevorzugten Ausführungsform sind die Stege mit einem tropfenförmigen Querschnitt ausgebildet und somit besonders strömungsgünstig geformt. Das zweite Verdrängerteil wird vorzugsweise von zwei- oder mehr Stegen, besonders bevorzugt von drei oder mehr Stegen an seinem Platz gehalten.

Um die Montage des Verdrängerkörpers in dem Verdichterbypass zu ermöglichen, ist das Gehäuse vorzugsweise zweiteilig ausgeführt. In einer bevorzugten Ausführungsform werden die beiden Gehäuseteile durch zwei Halbschalen miteinander verbunden.

### Zeichnung

Im Folgenden wird die Erfindung anhand einer Zeichnung näher beschrieben.

Es zeigt:
- Figur 1: ein Verdichterbypassventil mit darin aufgenommenem Verdrängerkörper mit verschlossenem Kanal,
- Figur 2: ein Verdichterbypassventil mit darin aufgenommenem Verdrängerkörper bei geöffnetem Kanal,
- Figur 3: eine weitere Ausführungsform eines Verdichterbypassventils.

### Ausführungsvarianten

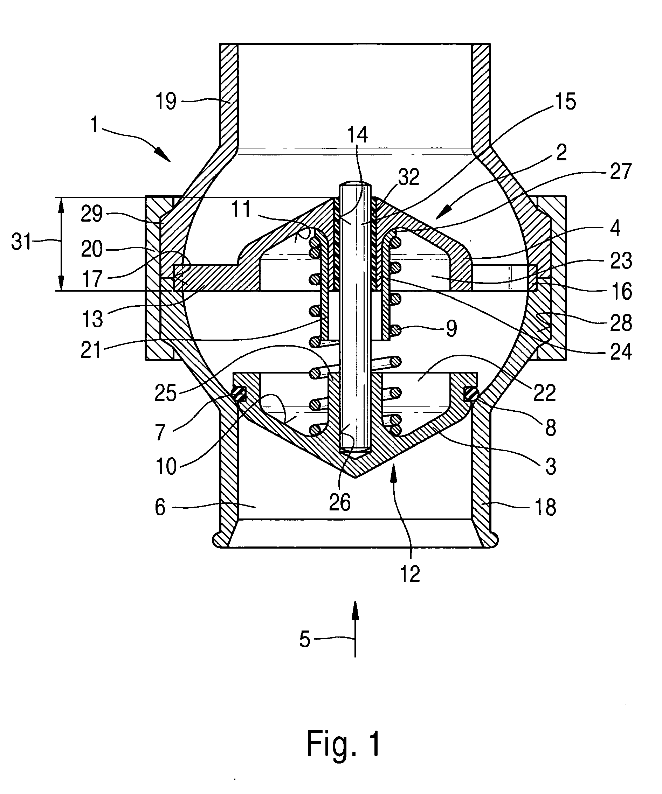

Figur 1 zeigt ein Verdichterbypassventil mit darin ausgenommenem Verdrängerkörper mit geschlossenem Kanal.

Bei einer mehrstufigen, vorzugsweise zweistufigen, Aufladung mit einem Abgasturbolader in einer Verbrennungskraftmaschine wird die Frischluft zunächst in einer Niederdruckverdichterstufe verdichtet. Die derart verdichtete Frischluft wird vorzugsweise in einem Zwischenkühler gekühlt, bevor sie einer Hochdruckverdichterstufe zugeführt wird. Bei geringen Luftmengen wird die Frischluft in der Hochdruckverdichterstufe verdichtet. Mit steigendem Frischluftbedarf wird die Stopfgrenze des Hochdruckverdichters erreicht. Um zu vermeiden, dass der Hochdruckverdichter als Drossel wirkt, wird bei einem Frischluftmassenstrom, der oberhalb der Stopfgrenze des Hochdruckverdichters liegt, ein Teil der Frischluft über einen Verdichterbypass 6 um den Hochdruckverdichter herumgeführt.

Der Verdichterbypass 6 umfasst ein Ventilgehäuse 1 mit einem darin aufgenommenen Verdrängerkörper 2. Der Verdrängerkörper 2 ist in ein erstes Verdrängerteil 3 und ein zweites Verdrängerteil 4 geteilt. Das erste Verdrängerteil 3 ist der Anströmseite, d.h. der Seite des Verdrängerkörpers 2, auf die die Frischluftströmung zuerst trifft, zugewandt. Die Anströmrichtung ist durch den Pfeil mit Bezugszeichen 5 gekennzeichnet.

Solange aufgrund geringer Frischluftmengen der auf der Frischluftseite erzeugte Druck unterhalb dem erforderlichen Öffnungsdruck des Verdrängerbypasses 6 liegt, bleibt der Verdichterbypass 6 verschlossen. Hierzu steht das erste Verdrängerteil 3 mit einem Dichtungselement 7 in einem im Ventilgehäuse 1 ausgebildeten Schließsitz 8. Das Dichtungselement 7 ist vorzugsweise ein O-Ring, der vorzugsweise aus einem elastischen Material, wie z.B. Fluor-Kautschuk oder anderen dem Fachmann bekannten temperaturstabilen elastischen Kunststoffen besteht.

Die Kraft, mit der das erste Verdrängerteil 3 in den Schließsitz 8 gestellt wird, wird durch ein Federelement 9 aufgebracht. Das Federelement 9 ist vorzugsweise eine als Druckfeder ausgebildete Spiralfeder.

Das Federelement 9 stützt sich mit einer Seite gegen eine Innenfläche 10 des ersten Verdrängerteils 3 und mit der zweiten Seite gegen einen Ansatz 27 einer Hülse 21, die mit dem zweiten Verdrängerteil 4 verbunden ist. Dabei weist der Ansatz 27 einer Innenfläche 11 des zweiten Verdrängerteils 4 zu. Durch die Kraft, welche das Federelement 9 auf die Innenfläche 10 des ersten Verdrängerteils 3 aufbringt, wird das erste Verdrängerteil 3 mit dem Dichtungselement 7 in seinen Schließsitz 8 gestellt, wodurch der Verdichterbypass 6 geschlossen wird.

An einer Anströmseite 12, die der Innenfläche 10 des ersten Verdrängerteils 3 gegenüber liegt, wird das erste Verdrängerteil 3 angeströmt. Die auf die Anströmseite 12 auftreffende Luft übt eine Druckkraft auf das erste Verdrängerteil 3 aus. Solange die Druckkraft auf die Anströmseite 12 des ersten Verdrängerteils 3 kleiner ist als die Federkraft des Federelements 9, die auf die Innenfläche 10 des ersten Verdrängerteils 3 wirkt, steht das erste Verdrängerteil 3 mit dem Dichtungselement 7 im Schließsitz 8 und verschließt so den Verdichterbypass 6. Mit zunehmendem Druck der Luft im Verdichterbypass 6 nimmt die Druckkraft auf die Anströmseite 12 des ersten Verdrängerteils 3 zu. Sobald die Druckkraft auf die Anströmseite 12 größer ist als die Federkraft des Federelements 9, hebt sich das erste Verdrängerteil 3 aus dem Schließsitz 8 und gibt so den Verdichterbypass 6 frei. Um zu vermeiden, dass hierbei ein plötzlicher Druckabfall an der Anströmseite 12 auftritt und zu einem erneuten Verschließen des Verdichterbypasses 6 und somit zu unerwünschten Pulsationen führt, ist die Anströmseite 12 vorzugsweise strömungsgünstig ausgebildet. Durch die strömungsgünstige Ausbildung der Anströmseite 12 wird der Druckverlust beim Durchströmen des Verdichterbypasses 6 reduziert.

Sobald die Federkraft des Federelements 9 größer ist als die auf die Anströmseite 12 des ersten Verdrängerteils 3 wirkende Druckkraft bewegt sich das erste Verdrängerteil 3 entgegen der Anströmrichtung 5 und wird so in den Schließsitz 8 gestellt und verschließt den Verdichterbypass 6.

Das zweite Verdrängerteil 4 wird durch Stege 13 im Ventilgehäuse 1 gehalten. Die Stege 13 haben z.B. rechteckförmigen, dreieckförmigen, kreisförmigen, tropfenförmigen oder jeden beliebigen anderen, dem Fachmann bekannten Querschnitt. In einer bevorzugten Ausführungsform ist der Querschnitt der Stege 13 tropfenförmig ausgebildet, wobei die halbkreisförmige Seite des tropfenförmigen Steges 13 von der Frischluft angeströmt wird. Hierdurch ist der Steg 13 besonders strömungsgünstig in Anströmrichtung ausgebildet.

Im zweiten Verdrängerteil 4 ist eine Bohrung 14 ausgeführt, in der ein Führungsstift 15 beweglich aufgenommen ist. An dem der Anströmseite zugewandten Ende ist das erste Verdrängerteil 3 am Führungsstift 15 fixiert. Die Verbindung des Führungsstifts 15 mit dem ersten Verdrängerteil 3 kann kraftschlüssig oder formschlüssig erfolgen. So kann die Verbindung z.B. durch Einschrumpfen, als Presspassung, als Schraubverbindung, als Klebverbindung oder auch als Schweißverbindung ausgeführt sein. Bevorzugt wird der Führungsstift 15 durch Einschrumpfen mit dem ersten Verdrängerteil 3 verbunden.

Die Länge des Führungsstifts 15 ist so bemessen, dass dieser bei geschlossenem Verdichterbypass 6 mit einem so großen Abschnitt in der Bohrung 14 aufgenommen bleibt, dass es nicht zu einem Verkanten oder Herausfallen des Führungsstifts 15 aus der Bohrung 14 kommt. Damit das erste Verdrängerteil 3 in Anströmrichtung 5 oder entgegen der Anströmrichtung 5 bewegt wird, ist die Bohrung 14 vorzugsweise parallel zur Anströmrichtung 5 ausgerichtet. Bevorzugt ist in der Bohrung 14 eine Hülse 32 aufgenommen, in der der Führungsstift 15 geführt ist. Die Hülse 32 ist vorzugsweise aus einem die Haftreibung reduzierenden Material, z.B. PTFE, gefertigt, um die Gleiteigenschaften des Führungsstiftes 15 zu verbessern.

Zur Gewichtseinsparung ist im ersten Verdrängerteil 3 ein Hohlraum 22 und im zweiten Verdrängerteil 4 ein Hohlraum 23 ausgebildet.

In der hier dargestellten Ausführungsform ist am zweiten Verdrängerteil 4 ein Zapfen 24 ausgebildet, der in den Hohlraum 23 hineinragt. Durch den Zapfen 24 wird die Bohrung 14, welche den Führungsstift 15 aufnimmt, verlängert. Durch die verlängerte Bohrung 14 wird die Führungslänge 31 des Führungsstiftes 15 in der Bohrung 14 vergrößert, wodurch gewährleistet wird, dass der Führungsstift 15 nicht in der Bohrung 14 verkantet.

Wie im zweiten Verdrängerteil 4 ist auch am ersten Verdrängerteil 3 ein Zapfen 25 ausgebildet, der in den Hohlraum 22 des ersten Verdrängerteils 3 ragt. Im Zapfen 25 ist eine Bohrung 26 ausgeführt, welche den Führungsstift 15 aufnimmt. Der Führungsstift 15 ist in der Bohrung 26 kraft- oder formschlüssig mit dem ersten Verdrängerteil 3 verbunden.

Der Zapfen 24 am zweiten Verdrängerteil 4 ist von einer Hülse 21 umschlossen. Die Hülse 21 ist vorzugsweise kraftschlüssig z.B. mittels einer Schraubverbindung am Zapfen 24 des zweiten Verdrängerteils 4 befestigt. An der der Innenfläche 11 des zweiten Verdrängerteils 4 zuweisenden Seite ist an der Hülse 21 ein umlaufender stufenförmiger Ansatz 27 ausgebildet. Auf dem Ansatz 27 stützt sich eine Seite des Federelements 9 ab. Durch die Position des Ansatzes 27, welcher z.B. durch eine Schraubbewegung bei aufgeschraubter Hülse 21 in Richtung des ersten Verdrängerteils 3 oder von diesem weg bewegt werden kann, kann die Federkraft des Federelements 9 eingestellt werden. Mit abnehmendem Abstand zwischen dem Ansatz 27 und der Innenfläche 10 des ersten Verdrängerteils 3 nimmt die Federkraft im Federelement 9 zu. Mit steigender Federkraft des Federelements 9 ist eine größere Kraft und damit ein höherer Druck im Verdichterbypass 6 zum Öffnen des Verdichterbypasses 6 erforderlich.

Zur Montage ist das Ventilgehäuse 1 vorzugsweise in ein erstes Gehäuseteil 18 und ein zweites Gehäuseteil 19 geteilt. Das Ventilgehäuse 1 ist vorzugsweise an der Position geteilt, an der der Haltering 16 aufgenommen ist. Hierzu ist jeweils ein Teil der Nut 17 im ersten Gehäuseteil 18 und im zweiten Gehäuseteil 19 ausgebildet. Durch Zusammenfügen der Gehäuseteile 18, 19 nimmt der Querschnitt der Nut 17 die gleiche Form an wie der Querschnitt des Halterings 16. Nach dem Zusammenfügen der Gehäuseteile 18, 19 und des zweiten Verdrängerteils 4 mit dem über Stege 13 daran angebrachten Haltering 16 wird das Ventilgehäuse 1 von einer Bandschelle 20, z.B. einer V-Bandschelle oder jeder anderen, dem Fachmann bekannten Bandschelle, umschlossen.

In der Bandschelle 20 ist eine Nut 28 und am Ventilgehäuse 1 ein Bund 29 ausgebildet. Dabei sind der Querschnitt des Bundes 29 und der Querschnitt der Nut 28 gleich. Damit durch die Bandschelle 20 die Gehäuseteile 18, 19 miteinander verbunden werden, ist der Bund 29 jeweils zur Hälfte im ersten Gehäuseteil 18 und dem zweiten Gehäuseteil 19 ausgebildet. Durch Zusammenfügen der Gehäuseteile 18, 19 entsteht so der Bund 29, dessen Querschnitt mit dem Querschnitt der Nut 28 in der Bandschelle 20 übereinstimmt. Eine haltbare Verbindung des ersten Gehäuseteils 18 mit dem zweiten Gehäuseteil 19 wird durch ein kraft- oder formschlüssiges Verbinden mit der Bandschelle 20 erreicht.

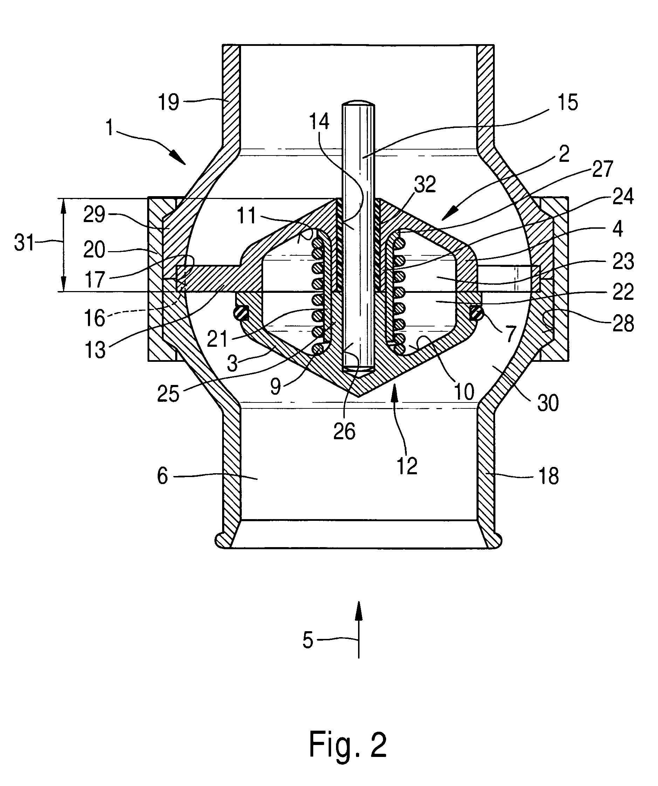

In Figur 2 ist ein geöffnetes Verdichterbypassventil gemäß Figur 1 dargestellt.

Sobald der Druck im Verdichterbypass 6 so groß ist, dass die auf die Anströmseite 12 wirkende Druckkraft größer ist als die Federkraft des Federelements 9, bewegt sich das erste Verdrängerteil 3 in Anströmrichtung 5 auf das zweite Verdrängerteil 4 zu. Hierdurch hebt sich der Dichtring 7 aus dem Schließsitz 8 und gibt so einen Kanal 30 frei, der zwischen dem Ventilgehäuse 1 und dem Verdrängerkörper 2 ausgebildet wird. Die Bewegungsrichtung des ersten Verdrängerteils 3 ist durch die Führung des Führungsstifts 15 in der Bohrung 14 vorgegeben.

Damit das Federelement 9 beim Zusammendrücken während der Bewegung des ersten Verdrängerteils 3 in Richtung des zweiten Verdrängerteils 4 nicht knickt, umschließt das Federelement 9 die Hülse 21. Eine vergrößerte Anlagefläche des Federelements 9 an die Hülse 21 wird dadurch erreicht, dass die Hülse 21 über den Zapfen 24 hinausragt. Der Zapfen 25 am ersten Verdrängerteil 3 ist so gestaltet, dass dieser von der Hülse 21 aufgenommen und bei geöffnetem Verdichterbypass 6 von der Hülse 21 umschlossen wird. Beim Einfahren des Zapfens 25 in die Hülse 21 bildet sich zwischen dem Zapfen 24 am zweiten Verdrängerteil 4 und dem Zapfen 25 am ersten Verdrängerteil 3 innerhalb der Hülse 21 ein Luftpolster aus, welches die Bewegung des ersten Verdrängerteils 3 dämpft. Hierdurch wird ein hartes Anschlagen des ersten Verdrängerteils 3 an das zweite Verdrängerteil 4 und damit ein mögliches Rückprallen vermieden.

Bei geöffnetem Kanal 30 berühren sich das erste Verdrängerteil 3 und das zweite Verdrängerteil 4 und bilden so einen geschlossenen Verdrängerkörper 2.

Bei der hier dargestellten Ausführungsform sind die Zapfen 24, 25 so ausgebildet, dass sich diese bei geöffnetem Kanal 30 ebenfalls berühren.

Sobald der Druck im Verdichterbypass 6 abnimmt und die auf die Anströmseite 12 wirkende Druckkraft kleiner ist als die durch das Federelement 9 auf das erste Verdrängerteil 3 ausgeübte Federkraft, bewegt sich das erste Verdrängerteil 3 vom zweiten Verdrängerteil 4 weg, bis das Dichtungselement 7 in den Schließsitz 8 gestellt ist und so den Verdichterbypass 6 wieder verschließt.

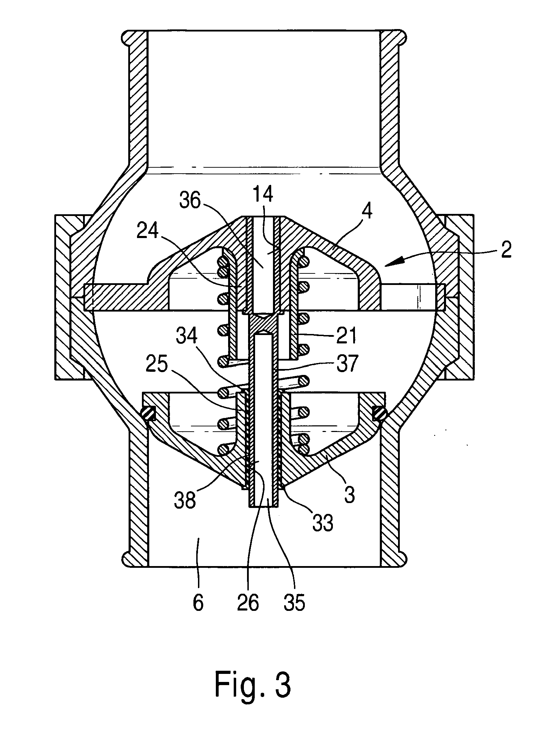

In Figur 3 ist eine weitere Ausführungsform eines erfindungsgemäßen Verdichterbypassventils dargestellt.

Bei dem in Figur 3 dargestellten Verdichterbypassventil ist ein Führungsstift 37 kraft- oder formschlüssig mit der Bohrung 14 im zweiten Verdrängerteil 4 verbunden. Die Verbindung kann z.B. durch Einschrumpfen, als Presspassung, als Schweißverbindung oder als Schraubverbindung ausgeführt sein.

Auf dem Führungsstift 37 ist das erste Verdrängerteil 3 bewegbar aufgenommen. Hierzu umschließt die Bohrung 26 im ersten Verdrängerteil 3 den Führungsstift 37. Um die Gleiteigenschaften des ersten Verdrängerteils 3 auf den Führungsstift 37 zu verbessern und um ein Verkanten zu vermeiden, ist in der Bohrung 26 eine Hülse 38 aufgenommen. Die Hülse 38 ist vorzugsweise aus einem Material gefertigt, welches die Haftreibung reduziert. Ein geeignetes Material ist z.B. PTFE. Es können jedoch auch andere, dem Fachmann bekannte Materialien mit niedrigerem Reibungskoeffizienten eingesetzt werden, die gegenüber den im Verdichterbypass 6 auftretenden Temperaturen stabil sind.

Damit die Hülse 38 nicht in der Bohrung 26 verrutscht, ist an ihrem einen Ende ein erster Bund 33 und am anderen Ende ein zweiter Bund 34 ausgebildet. Der erste Bund 33 und der zweite Bund 34 ragen dabei jeweils über den Durchmesser der Bohrung 26 hinaus. Um eine Montage der Hülse 32 zu ermöglichen, ist diese vorzugsweise in axialer Richtung geschlitzt.

Da bei der in Figur 3 dargestellten Ausführungsform nur das erste Verdrängerteil 3 ohne den Führungsstift 37 bewegt wird, wird die bewegte Masse weiter reduziert. Hierdurch ist ein noch schnelleres Öffnen des Verdichterbypasses 6 möglich. Wie auch bei der in den Figuren 1 und 2 dargestellten Ausführungsform ist am ersten Verdrängerteil 3 ein Zapfen 25 und am zweiten Verdrängerteil 4 ein Zapfen 24 ausgebildet. Der Zapfen 24 ist von der Hülse 21 umschlossen. Die Hülse 21 ragt über den Zapfen 24 hinaus. Beim Öffnen des Verdichterbypasses 6 bewegt sich der Zapfen 25 des ersten Verdrängerteils 3 in die Hülse 21 hinein und wird von dieser umschlossen. Dadurch bildet sich zwischen dem Zapfen 25 des ersten Verdrängerteils 3 und dem Zapfen 24 des zweiten Verdrängerteils 4 ein Luftpolster, welches die Bewegung des ersten Verdrängerteils 3 beim Öffnen dämpft.

In der in Figur 3 dargestellten Ausführungsform sind im Führungsstift 37 eine erste Bohrung 35 und eine zweite Bohrung 36 ausgebildet. Durch Ausbildung der ersten Bohrung 35 und der zweiten Bohrung 36 wird die Elastizität des Führungsstifts 37 vergrößert. Hierdurch kann eine unterschiedliche Wärmeausdehnung bei der Wahl verschiedener Materialien für den Führungsstift 37 und das erste Verdrängerteil 3 bzw. zweite Verdrängerteil 4 kompensiert werden, z.B. Aluminium für das erste Verdrängerteil 3 bzw. zweite Verdrängerteil 4 und Stahl für den Führungsstift 37. Auch wird durch die erste Bohrung 35 und die zweite Bohrung 36 die Masse des Verdrängerkörpers 2 weiter reduziert.

### Bezugszeichenliste

- 1: Ventilgehäuse
- 2: Verdrängerkörper
- 3: erstes Verdrängerteil
- 4: zweites Verdrängerteil
- 5: Anströmrichtung
- 6: Verdichterbypass
- 7: Dichtungselement
- 8: Schließsitz
- 9: Federelement
- 10: Innenfläche des ersten Verdrängerteils 3
- 11: Innenfläche des zweiten Verdrängerteils 4
- 12: Anströmseite
- 13: Steg
- 14: Bohrung
- 15: Führungsstift
- 16: Haltering
- 17: Nut
- 18: erstes Gehäuseteil
- 19: zweites Gehäuseteil
- 20: Halbschale
- 21: Hülse
- 22: Hohlraum im ersten Verdrängerteil 3
- 23: Hohlraum in zweiten Verdrängerteil 4
- 24: Zapfen im zweiten Verdrängerteil 4
- 25: Zapfen im ersten Verdrängerteil 3
- 26: Bohrung
- 27: Ansatz
- 28: Nut in Halbschale 20
- 29: Bund
- 30: Kanal
- 31: Führungslänge
- 32: Hülse
- 33: erster Bund
- 34: zweiter Bund
- 35: erste Bohrung
- 36: zweite Bohrung
- 37: Führungsstift
- 38: Hülse

## Patentansprüche

1. Verdichterbypassventil für mehrstufige Aufladung in Verbrennungskraftmaschinen mit Aufladeeinrichtung, mit einem in einem Ventilgehäuse (1) aufgenommenen Verdrängerkörper (2), der in ein erstes Verdrängerteil (3) und ein zweites Verdrängerteil (4) geteilt ist und einen Verdichterbypass (6) mit dem der Anströmseite zugewandten ersten Verdrängerteil (3) verschließt oder freigibt, **dadurch gekennzeichnet, dass** das zweite Verdrängerteil (4) mit dem Ventilgehäuse verbunden ist und das erste Verdrängerteil (3) beweglich und vom zweiten Verdrängerteil (4) geführt ist und dass im Verdrängerkörper (2) ein Federelement (9) aufgenommen ist, welches das erste Verdrängerteil (3) bei geschlossenem Ventil in seinen Schließsitz stellt.

2. Verdichterbypassventil nach Anspruch 1, **dadurch gekennzeichnet, dass** im ersten Verdrängerteil (3) und im zweiten Verdrängerteil (4) Hohlräume (22, 23) ausgebildet sind.

3. Verdichterbypassventil nach Anspruch 1 oder 2, **dadurch gekennzeichnet, dass** der Verdrängerkörper (2) strömungsgünstig ausgebildet ist

4. Verdichterbypassventil nach einem der Ansprüche 1 bis 3, **dadurch gekennzeichnet, dass** der Verdrängerkörper (2) aus einem Leichtmetall oder einer Leichtmetalllegierung gefertigt ist.

5. Verdichterbypassventil nach einem der Ansprüche 1 bis 4, **dadurch gekennzeichnet, dass** das erste Verdrängerteil (3) mit einem Führungsstift (15) in einer Bohrung (14) im zweiten Verdrängerteil (4) geführt ist.

6. Verdichterbypassvenfiil nach Anspruch 5, **dadurch gekennzeichnet, dass** in der Bohrung (14) im zweiten Verdrängerteil (4) eine Hülse (32) aus einem die Haftreibung reduzierenden Material aufgenommen ist, in der der Führungsstift (15) geführt ist.

7. Verdichterbypassventil nach einem der Ansprüche 1 bis 4, **dadurch gekennzeichnet, dass** das erste Verdrängerteil (3) mit einer Bohrung (26) beweglich auf einem mit dem zweiten Verdrängerteil (4) verbundenen Führungsstift (37) geführt ist.

8. Verdichterbypassventil nach Anspruch 7, **dadurch gekennzeichnet, dass** in der Bohrung (26) im ersten Verdrängerteil (3) eine Hülse (38) aus einem die Haftreibung reduzierenden Material aufgenommen ist, in der der Führungsstift (37) geführt ist.

9. Verdichterbypassventil nach einem der Ansprüche 1 bis 8, **dadurch gekennzeichnet, dass** das erste Verdrängerteil (3) von einem Dichtungselement (7) umschlossen ist, welches bei geschlossenem Ventil am Ventilgehäuse (1) anliegt.

10. Verdichterbypassventil nach einem der Ansprüche 1 bis 9, **dadurch gekennzeichnet, dass** der Verdrängerkörper (2) durch Stege (13) mit dem Ventilgehäuse (1) verbunden ist

11. Verdichterbypassventil nach einem der Ansprüche 1 bis 10, **dadurch gekennzeichnet, dass** das Ventilgehäuse in ein erstes Gehäuseteil (18) und ein zweites Gehäuseteil (19) geteilt ist.

12. Verdichterbypassventil nach Anspruch 11, **dadurch gekennzeichnet, dass** das erste Gehäuseteil (18) und das zweite Gehäuseteil (19) durch zwei Halbschalen (20) miteinander verbunden werden.

13. Verdichterbypassventil nach einem der Ansprüche 1 bis 12, **dadurch gekennzeichnet, dass** ein Zapfen (24) am zweiten Verdrängerteil (4) von einer Hülse (21) umschlossen ist, die über den Zapfen (24) herausragt und in die ein Zapfen (25) am ersten Verdrängerteil (3) beim Freigeben des Verdichterbypasses (6) hineingleitet, so dass sich zwischen dem Zapfen (25) am zweiten Verdrängerteil (4) und dem Zapfen (24) am ersten Verdrängerteil (3) ein Luftpolster bildet, welches die Bewegung des ersten Verdrängerteils (3) dämpft.

## Claims

1. Compressor bypass valve for multi-stage supercharging in internal combustion engines having a supercharging device, with a displacer body (2) which is received in a valve housing (1) and which is divided into a first displacer part (3) and a second displacer part (4) and closes or releases a compressor bypass (6) by means of the first displacer part (3) facing the inflow side, **characterized in that** the second displacer part (4) is connected to the valve housing, and the first displacer part (3) is movable and guided by the second displacer part (4), and **in that** the displacer body (2) receives a spring element (9) which, with the valve closed, puts the first displacer part (3) into its closing seat.

2. Compressor bypass valve according to Claim 1, **characterized in that** cavities (22, 23) are formed in the first displacer part (3) and in the second displacer part (4).

3. Compressor bypass valve according to Claim 1 or 2, **characterized in that** the displacer body (2) is of streamlined design.

4. Compressor bypass valve according to one of Claims 1 to 3, **characterized in that** the displacer body (2) is manufactured from a light metal or a light-metal alloy.

5. Compressor bypass valve according to one of Claims 1 to 4, **characterized in that** the first displacer part (3) is guided in a bore (14) in the second displacer part (4) by means of a guide pin (15).

6. Compressor bypass valve according to Claim 5, **characterized in that** the bore (14) in the second displacer part (4) receives a sleeve (32) which consists of a material reducing the static friction and in which the guide pin (15) is guided.

7. Compressor bypass valve according to one of Claims 1 to 4, **characterized in that** the first displacer part (3) is guided movably by means of a bore (26) on a guide pin (37) connected to the second displacer part (4).

8. Compressor bypass valve according to Claim 7, **characterized in that** the bore (26) in the first displacer part (3) receives a sleeve (38) which consists of a material reducing the static friction and in which the guide pin (37) is guided.

9. Compressor bypass valve according to one of Claims 1 to 8, **characterized in that** the first displacer part (3) is surrounded by a sealing element (7) which, with the valve closed, bears against the valve housing (1).

10. Compressor bypass valve according to one of Claims 1 to 9, **characterized in that** the displacer body (2) is connected to the valve housing (1) by means of webs (13).

11. Compressor bypass valve according to one of Claims 1 to 10, **characterized in that** the valve housing is divided into a first housing part (18) and a second housing part (19).

12. Compressor bypass valve according to Claim 11, **characterized in that** the first housing part (18) and the second housing part (19) are connected to one another by means of two half-shells (20).

13. Compressor bypass valve according to one of Claims 1 to 12, **characterized in that** a tenon (24) on the second displacer part (4) is surrounded by a sleeve (21) which projects beyond the tenon (24) and into which a tenon (25) on the first displacer part (3) slides when the compressor bypass (6) is released, so that an air cushion, which damps the movement of the first displacer part (3), is formed between the tenon (25) on the second displacer part (4) and the tenon (24) on the first displacer part (3).

## Revendications

1. Soupape de dérivation de compresseur pour une suralimentation séquentielle de moteurs à combustion interne comportant une installation de suralimentation, ayant un organe de refoulement 2 logé dans un boîtier de soupape 1, divisé en une première partie 3 et une seconde partie 4 et une dérivation de compresseur 6 que l'on ferme ou libère par la première partie 3 de l'organe de refoulement, tournée vers le côté amont,
**caractérisée en ce que**
la seconde partie 4 de l'organe de refoulement est reliée au boîtier de la soupape et la première partie 3 de cet organe, mobile, est guidée par la seconde partie 4, et
l'organe de refoulement 2 loge un élément de ressort 9 qui applique la première partie 3 de l'organe de refoulement contre son siège de fermeture lorsque la soupape est fermée.

2. Soupape de dérivation de compresseur selon la revendication 1,
**caractérisée par**
des cavités 22, 23 réalisées dans la première partie 3 et dans la seconde partie 4 de l'organe de refoulement.

3. Soupape de dérivation de compresseur selon l'une quelconque des revendications 1 ou 2,
**caractérisée en ce que**
l'organe de refoulement 2 a de bonnes caractéristiques d'écoulement.

4. Soupape de dérivation de compresseur selon l'une quelconque des revendications 1 à 3,
**caractérisée en ce que**
l'organe de refoulement 2 est fabriqué en un métal léger ou en un alliage de métaux légers.

5. Soupape de dérivation de compresseur selon l'une quelconque des revendications 1 à 4,
**caractérisée en ce que**
la première partie 3 est guidée dans un perçage 14 de la seconde partie 4 par une broche de guidage 15.

6. Soupape de dérivation de compresseur selon la revendication 5,
**caractérisée en ce que**
le perçage 14 de la seconde partie 4 de l'organe de refoulement comporte un manchon 32 en une matière réduisant le frottement et dans lequel est guidée la broche 15.

7. Soupape de dérivation de compresseur selon l'une quelconque des revendications 1 à 4,
**caractérisée en ce que**
la première partie 3 de l'organe de refoulement est guidée par un perçage 26 de manière mobile sur la broche de guidage 37 reliée à la seconde partie 4 de l'organe de refoulement.

8. Soupape de dérivation de compresseur selon la revendication 7,
**caractérisée en ce que**
le perçage 26 de la première partie 3 comporte un manchon 38 en une matière réduisant le frottement et guidant la broche de guidage 37.

9. Soupape de dérivation de compresseur selon l'une quelconque des revendications 1 à 8,
**caractérisée en ce que**
la première partie 3 de l'organe de refoulement est entourée par un élément d'étanchéité 7 appliqué contre le boîtier 1 de la soupape lorsque la soupape est fermée.

10. Soupape de dérivation de compresseur selon l'une quelconque des revendications 1 à 9,
**caractérisée en ce que**
l'organe de refoulement 2 est relié au boîtier 1 de la soupape par des entretoises 13.

11. Soupape de dérivation de compresseur selon l'une quelconque des revendications 1 à 10,
**caractérisée en ce que**
le boîtier de soupape est divisé en une première partie 18 et en une seconde partie 19.

12. Soupape de dérivation de compresseur selon la revendication 11,
**caractérisée en ce que**
la première partie 18 du boîtier et la seconde partie 19 du boîtier sont reliées l'une à l'autre par des demi coquilles 20.

13. Soupape de dérivation de compresseur selon l'une quelconque des revendications 1 à 12,
**caractérisée en ce qu'**
un goujon 24 de la seconde partie 4 est entouré par un manchon 21 qui dépasse du goujon 24 et dans laquelle glisse un goujon 25 de la première partie 3 de l'organe de refoulement lors de la libération de la soupape de dérivation 6 pour former un coussin d'air entre le goujon 25 de la seconde partie 4 et le goujon 24 de la première partie 3 de l'organe de refoulement, ce coussin d'air amortissant le mouvement de la première partie 3 de l'organe de refoulement.
